# EUROPEAN PATENT APPLICATION

(11) **EP 0 629 949 A2**
(43) Date of publication of application: **21.12.1994**
(21) Application number: 94107943.6
(22) Date of filing: 24.05.1994
(51) Int. Cl.: G06F 11/00

(54) **System and method of recovering from process failure in a write lock control system**

(30) Priority: 14.06.1993 US 77231
(71) Applicant: International Business Machines Corporation, Armonk, N.Y. 10504 (US)
(72) Inventor: Forman, Ira Richard, Austin, Texas 78746 (US); Madduri, Hari Haranath, Austin, Texas 78750 (US)
(74) Representative: Burt, Roger James, Dr.

(57) **Abstract**

Recovering from failure of a distributed processing system process designated as a master process for at least one shared resource. The method and system of the invention provides for detection of the failure (200) by one or more of the shadow processes. The detecting process tests (202) to determine whether it has the shared write lock managed by the master process. If it does, it becomes the master process (204). If not, it determines from the shared control file which process holds the write lock (206) and it communicates to that process a request (208) to assume master process responsibilities. That process attempts to establish itself as master process (210). A test is performed (212) to determine if a new master process has been designated. If not, a race is conducted (214) between all shadow processes.

## Description

The present invention relates to the operation of distributed processing computer systems. In particular it relates to those systems that have a plurality of processing nodes each one having access to a copy of at least one replicated data object and which require apparatus and methods for managing access to the replicated data object. Still more particularly, the present invention relates to the management of a write lock that grants permission to one of a number of distributed processes allowing that process to update a data item.

Distributed computer systems are created by linking a number of computer systems using a communications network. Distributed systems frequently have the ability to share data resident on a single system. Replicated data systems implement data sharing by providing a replica copy of a data object to each process using that data object. Replication reduces the access time for each processor by eliminating the need to send messages over the network to retrieve and supply the necessary data. A replicated object is a logical unit of data existing in one of the computer systems but physically replicated to multiple distributed computer systems. Replicated copies are typically maintained in the memories of the distributed systems.

Replicated data objects also speed the update process by allowing immediate local update of a data object. Replication introduces a control problem, however, because many copies of the data object exist. The distributed system must have some means for controlling data update to ensure that all copies of the data remain consistent.

Prior art systems control data consistency by establishing a master data object copy in one of the distributed systems. The master copy is always assumed to be valid. Data object update by a system other than that of the master copy requires sending of the update to the master for update and propagation to all replicas.
This approach has the disadvantage of slowing local response time as the master data object update and propagation are performed.

Another means for controlling replicated data is described U.S. Patent Application Moving Write Lock for Replicated Objects, commonly assigned, filed on October 16, 1992 as Serial Number 07/961,757. The apparatus and method of that invention require that a single "write lock" exist in a distributed system and be passed to each process on request. Data object updates can only be performed by the holder of the "write lock." The "write lock" holder may update the local object copy and then send that update to the master processor for its update and propagation to other processes. The above patent application is incorporated by reference.

The method for determining which of a number of distributed processes is to be master is described in U.S. Patent Application serial number 07/961,750 filed October 16, 1992, entitled Determining a Winner of a Race in a Data Processing System and commonly assigned. The "race" between each process potentially controlling a resource results in the assignment of master status to the process first establishing write control over a Share Control File. Once control has been established by one process, other processes are assigned "shadow" status. Master process failure causes reevaluation of master status. This patent application is also incorporated by reference.

The technical problem addressed by the present invention is providing fault-tolerant features to a distributed processing system using write lock management of replicated data objects. Fault tolerance is required to ensure that no data or updates are lost due to the failure of a master process. Prior art systems, including those referenced above, require the master determination and write lock control to be reinitialized. This could result in loss of data if a locally updated data object replica has not been propagated to the master or other replicas.

The above drawbacks of the prior art are overcome by the invention as claimed.

The present invention is directed to an improved system and method for managing write locks in distributed processing systems.

The present invention offers an improved system and method for recovering from master failure in a write lock control system. The present invention is directed to a system and method that ensures the designation of a new master, considers data integrity by determining which of the shadow processes has the most current data object and attempting to make that shadow the master.

The present invention is directed to a method of recovering from process failure in a computer system having at least one computer processor with memory, where each data object of a plurality of data objects is replicated in a plurality of address spaces, wherein one of the processes is designated a master process for the data object and all other processes seeking access designated as shadow processes, and wherein the master process controls sharing of a write lock to permit at most one process to update the replicated data, the method comprising: receiving in at least one of the shadow processors an indicia of failure of the master process; testing to determine whether the one of the shadow processes currently holds the write lock; transferring master process control to the one of the shadow processes if the process currently holds the write lock; testing to determine which of the shadow processes hold the write lock if the receiving one of the shadow processes does not; requesting the shadow process holding the write lock to establish itself as the master process.

It is therefore an object of the present invention to provide a fault tolerant distributed system having replicated data object.

It is yet another object of the invention to assure that no data is lost due to master process failure.

It is still another object of the invention to ensure that the process currently holding a write lock as a first opportunity to become the master process.

The foregoing and other objects, features and advantages of the invention will be apparent from the following more particular description of a preferred embodiment of the invention, as illustrated in the accompanying drawings wherein like reference numbers represent like parts of the invention and where:
Figure 1 is a block diagram of a computer system of the type in which the present invention is embodied.
Figure 2 is a block diagram of a distributed network according to the present invention.
Figure 3 is a flowchart depicting the master resolution logic of prior art systems.
Figure 4 is a flowchart showing the logic of the preferred embodiment of the present invention.

The present invention is practiced in a distributed processing computer environment. This environment consists of a number of computer processors linked together by a communications network. Alternatively, the present invention could be practiced in a multiprogramming system in which a single computer (e.g. single CPU) supports the execution of multiple processes each having a separate address space.

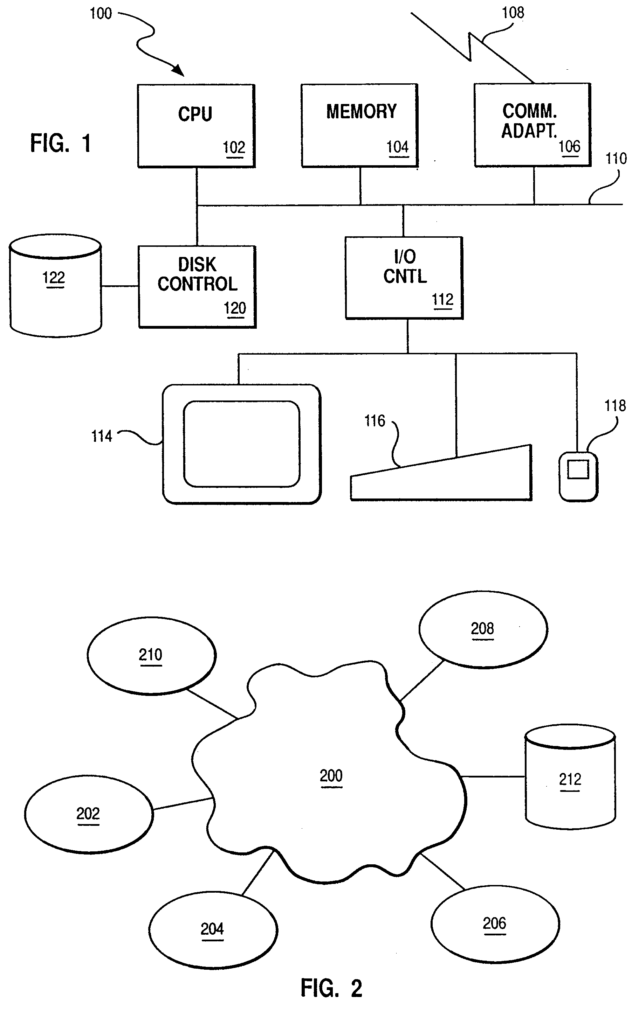

The preferred embodiment is practiced with linked computers. Each of the computer has the components shown generally for the system **100** in Figure 1. Processing is provided by central processing unit or CPU **102**. CPU **102** acts on instruction and data stored in random access memory **104**. Long term storage is provided on one or more disks **122** operated by disk controller **120**. A variety of other storage media could be employed including tape, CD-ROM, or WORM drives. Removable storage media may also be provided to store data or computer process instructions. Operators communicate with the system through I/O devices controlled by I/O controller **112**. Display **114** presents data to the operator while keyboard **116** and pointing device **118** allow the operator to direct the computer system. Communications adapter **106** controls communications between this processing unit and others on a network to which it is connected by network interface **108**.

Computer system **100** can be any known computer system including microcomputers, mini-computers and mainframe computers. The preferred embodiment envisions the use of computer systems such as the IBM Personal System/2 (PS/2) or IBM RISC System/6000 families of computers. (IBM, Personal System/2, PS/2 and RISC System/6000 are trademarks of the IBM Corp.) However, workstations from other vendors such as Sun or Hewlett Packard may be used, as well as computers from Compaq or Apple.

A distributed processing system is shown in Figure 2. Each of the processing nodes **202**, **204**, **206**, **208**, **210** is connected to a network **200** that enables communications among the processors. Additional permanent storage may be associated with the network as shown by disk storage unit **212**. In the alternative, persistent storage in one of the processing nodes could be used for network persistent storage.

Network **200** can be any type of network including LAN, WAN, ATM or other. Physical network protocols such as Ethernet or Token Ring can be used and communications protocols such as TCP/IP or Netbios or Novell Netware can control the network. Network file system management can be provided by a program based on the Sun Microsystems NFS technology or CMU AFS technology. Each of these file system programs allows distributed processes to access and manage data residing on remote systems. These systems create a single logical file system for each processor regardless of the physical location of individual files. NFS is described in greater detail in the IBM Corp. publication Communication Concepts and Procedures, Order No. SC23-2203-00.

The variety of permitted networks means that the processing nodes may be distributed throughout a building, across a campus, or even across national boundaries.

The preferred embodiment of the present invention is practiced in a distributed network of peer processing nodes. Peer nodes each have equal status in the network with none being master or slave nodes. Using peer nodes improves network efficiency because there is no single bottleneck through which requests must be funnelled. Instead each node can act independently to perform its functions. Another advantage is that failure of any particular node will not cause the entire network to fail as would be the case where a master processor existed. The disadvantage of peer networks is that there is no focal point for controlling data integrity of replicated data.

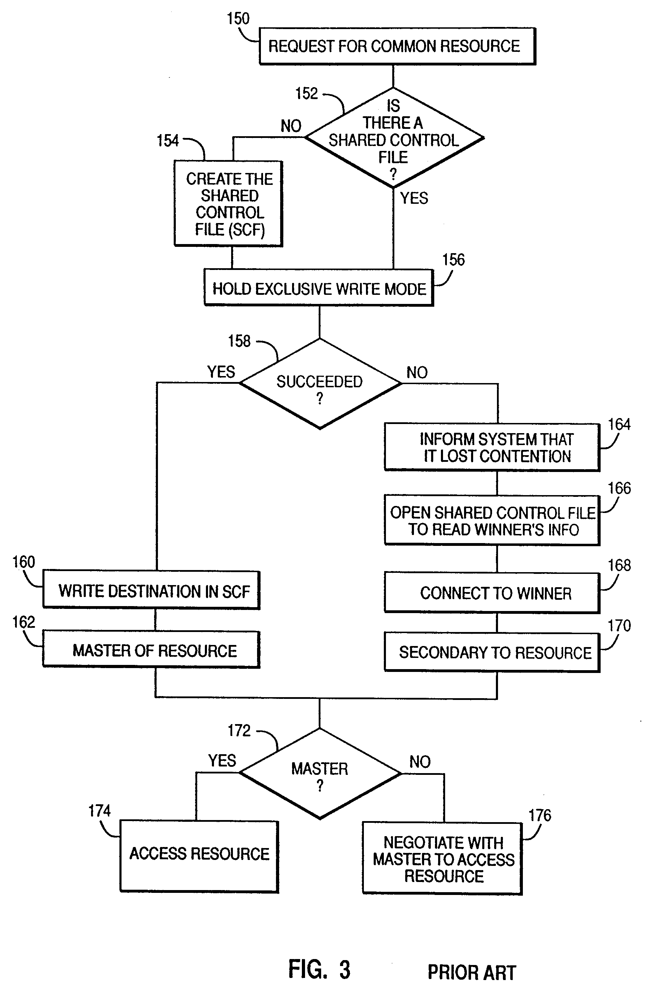

The above referenced U.S. Patent Application serial number 07/961.750 for Determining the Winner of a Race in a Data Processing System teaches a procedure for "racing" for control of a resource. Figure 3 illustrates the steps of this process. The process starts by generating a request for a common resource **150**. The processor requesting the resource tests to determine whether or not a shared control file exists **152**. If not, the process creates a shared control file **154**. In either case, the process attempts to hold exclusive write mode access **156**. If this is successful **158** the process updates the shared control file **160** and becomes master of that resource **162**. If the attempt to acquire exclusive write lock failed, the process is not the master **164** and must read the name of the master from the shared control file **166** and connect to the master **168** as a shadow **170**. If the requesting process is the master **172**, it can directly access the resource **174**, otherwise, it is a shadow process and must negotiate with the master for access **176**.

The shared control file of the preferred embodiment is a storage file in the logical file system. As such, it resides on one of the permanent storage devices in the distributed system. The present invention is equally applicable, however, to a shared resource control file managed in volatile memory (RAM) that is sharable among the distributed processes.

The master process has the responsibility for managing a write lock that permits the holder to update its copy of the replicated data object. Any process desiring to update a data object first requests the write lock from the master process. If the master does not have the lock, it determines which process does and then sends a message to that process to forward the lock to the requesting process.

Failure of the master process can have two deleterious effects. First, where a shadow process detects master failure and races to establish itself as a new master, it will create a new write lock. (Because it has no knowledge of the previous write lock.) This could result in the presence of two write locks for the same object. The old one and new one. Two processes could therefore be updating the same object without synchronization.

The second effect could be the designation as master process of a process that has an old, back level copy of the data object. This could occur where a shadow process has commenced update but has not completed the process of sending the update to the master for propagation or where the master failed before propagating the data. If a process other than the last updating process becomes master, it will assert its copy of the data object as the current value and will lose the update applied by the other process.

These two effects are overcome by the present invention. The present invention attempts to have the process with the most recent copy of the data object become master. This is typically the process that currently holds the write lock.

The process for handling master failure is modified from the process described in the above referenced U.S. Patent Applications serial number 07/961.750 by delaying initiation of a race until attempts to reassign the lock are made.

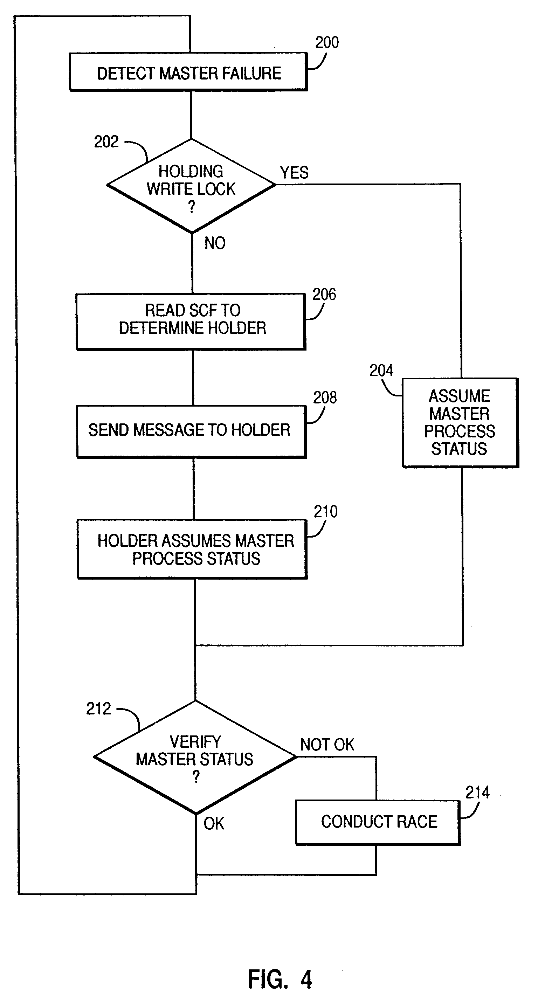

The process will be described with reference to Figure 4. The first, one of the remaining processes must detect master process failure **200**. In a shared file system such as NFS, the file system will notify linked processes of a failure of the other process. In other systems detection of failure may not occur until a message is sent to the master without response. The process detecting master failure next tests to determine whether it is holding the write lock for the resource controlled by the failed master **202**. If so, the detecting resource assumes the master processor duties by establishing control over the shared control file for that resource **204**. If the detecting process is not the holder of the write lock, it reads the shared control file to determine which process hold the lock **206**. A message is sent by the detecting process to the write lock holding process requesting that it assume master process duties **208**. The process receiving the message and holding the write lock attempts to establish itself as the master process **210**.

The system next tests **212** to determine whether a new master process has been designated for the resource of the failing process. If so, processing returns to normal state. If a master has not been established **214**, a race is conducted between all shadow process, as is done in the current system.

The shared control file according the preferred embodiment of the present invention, contains the process identity and communications address of the write lock holder. This information could be contained in a file or storage location separate from the shared control file in alternative designs.

## Claims

1. A method of recovering from process failure in a computer system having at least one computer processor with memory, where each data object of a plurality of data objects is replicated in a plurality of address spaces, wherein one of said processes is designated a master process for said data object and all other processes seeking access designated as shadow processes, and wherein said master process controls sharing of a write lock to permit at most one process to update said replicated data, the method comprising the steps of:
receiving (200) in at least one of said shadow processors an indicia of failure of said master process;
testing (202) to determine whether said one of said shadow processes currently holds said write lock;
transferring (204) master process control to said one of said shadow processes if said process currently holds said write lock;
testing (206) to determine which of said shadow processes hold the write lock if said receiving one of said shadow processes does not;
requesting (208) said shadow process holding said write lock to establish itself as the master process.

2. The method according to Claim 1, further comprising the steps of:
determining (212) whether a new master process has been designated;
conducting (214) a race between the shadow processes if the new master process has not been designated.

3. A computer system having at least one computer process with memory, where each data object of a plurality of data objects is replicated in a plurality of address spaces, wherein one of said processes is designated a master process for said data object and all other processes seeking access designated as shadow processes, and wherein said master process controls sharing of a write lock to permit at most one process to update said replicated data, the computer system comprising:
means for receiving in at least one of said shadow processors an indicia of failure of said master process;
means for testing to determine whether said one of said shadow processes currently holds said write lock;
means for transferring master process control to said one of said shadow processes if said process currently holds said write lock;
means for testing to determine which of said shadow processes hold the write lock if said receiving one of said shadow processes does not;
means for requesting said shadow process holding said write lock to establish itself as the master process.

4. The computer system according to Claim 3, further comprising:
means for determining whether a new master process has been designated;
means for conducting a race between the shadow processes if the new master process has not been designated.
